(19) **Europäisches Patentamt / European Patent Office / Office européen des brevets**

(11) **EP 1 850 126 B1**

(12) # EUROPEAN PATENT SPECIFICATION

(45) Date of publication and mention
of the grant of the patent:
**11.07.2012 Bulletin 2012/28**

(51) Int Cl.:
***G01N 29/07*** (2006.01)

(21) Application number: **06252262.8**

(22) Date of filing: **27.04.2006**

(54) **Systems and methods for determining the velocity of ultrasonic surface skimming longitudinal waves on various materials**

Systeme und Verfahren zur Bestimmung der Geschwindigkeit von Ultraschalllängswellen zur Oberflächenabscheidung auf verschiedenen Materialien

Systèmes et procédés de détermination de la vitesse des ondes longitudinales rasant la surface ultrasonique sur les divers matériaux

| | |
|---|---|
| (84) Designated Contracting States:<br>**DE GB**<br><br>(43) Date of publication of application:<br>**31.10.2007 Bulletin 2007/44**<br><br>(73) Proprietors:<br>• **United Technologies Corporation**<br>  **Hartford, CT 06101 (US)**<br>• **Thompson, R. Bruce**<br>  **Ames, IA 50014 (US)**<br><br>(72) Inventors:<br>• **Umbach, Jeffrey A.**<br>  **Palm Beach Garden FL 33410 (US)**<br>• **Smith, Kevin D.**<br>  **Glastonbury, CT 06033 (US)**<br>• **Thompson, R. Bruce**<br>  **Ames, IA 50014 (US)**<br><br>(74) Representative: **Leckey, David Herbert**<br>**Dehns**<br>**St Bride's House**<br>**10 Salisbury Square**<br>**London**<br>**EC4Y 8JD (GB)** | (56) References cited:<br>**US-A1- 2002 078 759**<br><br>• **C BESCOND, D LEVESQUE, M LORD, J-P MONCHALIN, S FORGUES: "Laser-Generated Surface Skimming Longitudinal Wave Measurement of Residual Stress in Shot Peened Samples" AIP CONFERENCE PROCEEDINGS, vol. 820, 6 March 2006 (2006-03-06), pages 1426-1433, XP002392377**<br>• **KIELCZYNSKI P J ET AL: "Characterization of texture in hexagonal materials using a line focus acoustic microscope" ULTRASONICS SYMPOSIUM PROCEEDINGS IEEE 1991, 8 December 1991 (1991-12-08), pages 1009-1013, XP010093976**<br>• **SATHISH S ET AL: "Development of a scan system for Rayleigh, shear and longitudinal wave velocity mapping" ULTRASONICS SYMPOSIUM, 1999. PROCEEDINGS. 1999 IEEE CAESARS TAHOE, NV, USA 17-20 OCT. 1999, PISCATAWAY, NJ, USA,IEEE, US, vol. 1, 17 October 1999 (1999-10-17), pages 597-600, XP010502391 ISBN: 0-7803-5722-1** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates generally to non-destructive measuring techniques, and more specifically, to determining the velocity of ultrasonic surface skimming longitudinal waves on various materials and/or to determining the crystallographic orientations of various materials based upon the velocity of the ultrasonic surface skimming longitudinal waves thereon.

### BACKGROUND OF THE INVENTION

Recently, cracks in some gas turbine engine components were attributed to the directionally solidified grains therein having a primary crystal grain orientation that deviated from the [001] axis much further than expected. Therefore, there has become a need to be able to non-destructively determine the primary crystal grain orientation in directionally solidified and single crystal materials to ensure that the primary crystal grain orientation falls within certain limits of a predetermined crystal axis.

One conventional non-destructive method of determining the crystallographic orientations of single crystal materials, commonly known as the Laue method, involves directing x-rays onto the material, where they are reflected therefrom and/or therethrough and captured as an x-ray diffraction pattern, which can then be analyzed to determine the crystallographic orientations of the material. The Laue method, while capable of determining both the primary and secondary grain orientations of single crystal materials, is time consuming and cannot be easily utilized to determine the crystallographic orientations of various gas turbine engine components on-wing or in production environments, etc. Furthermore, the Laue method cannot be feasibly used on columnar-grained materials (i.e., directionally solidified materials) because it would be too expensive and too cumbersome to reorient the material with respect to the stacking axis to determine the crystallographic orientations of each individual grain therein.

Therefore, it would be desirable to have improved systems and methods for accurately and non-destructively determining the crystallographic orientations of directionally solidified and/or single crystal materials. It would be desirable if the crystallographic orientations of such materials could be determined based upon the measured velocity of ultrasonic surface skimming longitudinal waves thereon. It would also be desirable if such systems and methods could be easily used in various environments (i.e., on-wing, in production environments, in engine overhaul shops, etc.).

A method for ultrasonic measurement of texture in a polycrystalline material is disclosed in US-A-4899589.

### SUMMARY OF THE INVENTION

The above-identified shortcomings of existing systems and methods for determining the crystallographic orientations of a material are overcome by embodiments of the present invention, which relates to systems and methods for non-destructively measuring the velocity of ultrasonic surface skimming longitudinal waves on a material. The measured velocity can then be used for various purposes, such as for determining the crystallographic orientations of the material, sorting various materials, etc.

According to the invention there is provided a method as set forth in claim 1.

The invention may be applied to various gas turbine engine components, such as, but not limited to, turbine blades, combustor liners, blade outer air seals, etc.

Embodiments of this invention may be utilized in various environments, such as, but not limited to, (a) while the component is on-wing; (b) while the component is in a production environment; (c) while the component is in an engine overhaul facility; (d) while the component is in a material salvage facility; and/or (e) while the component is in a re-work facility.

The method of this invention may utilize contact configurations, immersion configurations, and/or bubbler configurations.

Further details of this invention will be apparent to those skilled in the art during the course of the following description.

### DESCRIPTION OF THE DRAWINGS

Embodiments of this invention are described herein with reference to various figures, wherein like characters of reference designate like parts throughout the drawings, in which:

Figure 1 is a schematic drawing showing an embodiment of this invention utilizing a contact technique having a pitch-catch ultrasonic wave configuration;

Figure 2 is a schematic drawing showing an embodiment of this invention utilizing an immersion technique having a pitch-catch ultrasonic wave configuration; and

Figure 3 is a schematic drawing showing an embodiment of this invention utilizing a bubbler technique having a pitch-catch ultrasonic wave configuration.

### DETAILED DESCRIPTION OF THE INVENTION

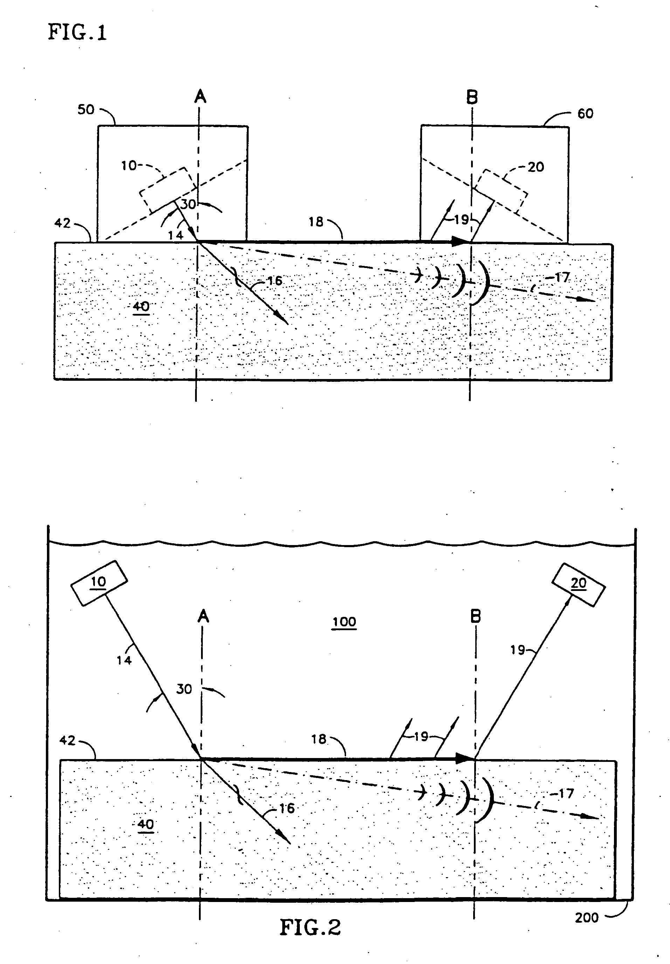

For the purposes of promoting an understanding of the invention, reference will now be made to some embodiments of this invention as illustrated in FIGURES 1-3 and specific language used to describe the same.

The terminology used herein is for the purpose of description, not limitation. Specific structural and functional details disclosed herein are not to be interpreted as limiting, but merely as a basis for teaching one skilled in the art to variously employ the present invention.

This invention relates to systems and methods for measuring the velocity of ultrasonic surface skimming longitudinal waves on various materials. Embodiments of these systems and methods may be used for nondestructively determining at least one crystal grain orientation (i.e., primary and/or secondary, etc.) of various materials based upon the measured velocity of the ultrasonic surface skimming longitudinal waves thereon. Such embodiments may be utilized on any single grain of material (i.e., on columnar grains in directionally solidified materials, on single grains in single crystal materials), provided the grain is large enough to allow the emitter and the detector to be properly positioned with respect thereto. The systems of this invention may be small and compact enough to be used almost anywhere in various environments, such as in production environments, on-wing, in engine overhaul facilities, in material salvage or re-work facilities, etc.

Embodiments of this invention utilize a contact technique having a pitch-catch ultrasonic wave configuration as shown in Figure 1. An emitter 10 positioned within a contact transducer 50 at a predetermined angle 30 generates ultrasonic shear waves 16 and ultrasonic compressional waves 17 in the material 40. When the compressional waves 17 are refracted at angles that include waves propagating along the surface 42 of the material 40, a surface skimming longitudinal wave 18 is created. Generally, this means that the incident wave 14 should be near the first critical angle as defined by Snell's law for the wedge material of the contact transducers 50, 60 and the material 40 be analyzed. The surface skimming longitudinal wave 18 is a leaky wave that emits leaking ultrasonic energy 19 from the surface 42 of the material 40. This leaking ultrasonic energy 19 is transmitted to the detector when the detector 20 is in direct contact with the surface 42 of the material 40. A detector 20 positioned within a contact transducer 60 detects the leaking ultrasonic waves 19, and the time-of-flight of the surface skimming longitudinal waves 18 between points A and B can be determined therefrom. The surface skimming longitudinal waves 18 and the associated leaking ultrasonic waves 19 arrive at the detector 20 first because they travel faster than the shear wave 16 and any of its reflected components. The time-of-flight of the surface skimming longitudinal wave 18 is indicative of the longitudinal velocity of the material 40, which varies depending upon the primary crystal grain orientation of the material.

The emitter 10 may comprise any ultrasonic wave emitter capable of emitting suitable ultrasonic waves. The detector 20 may comprise any ultrasonic wave detector capable of detecting the desired ultrasonic waves. In embodiments, the ultrasonic waves may have a frequency of about 5-15 MHz, but many other suitable frequencies are also possible, and this invention is not limited to any particular frequency range.

In operation, the emitter 10 may be adjusted to emit ultrasonic waves at any suitable angle 30, such as, but not limited to, about 22-28° from normal to the surface 42 of the material 40, so as to create compressional waves 17 at an angle near the longitudinal critical angle of the average velocity of the material 40.

The precise locations of points A and B can be easily determined by utilizing two reference samples having known velocities ($V_1$ and $V_2$, respectively) to calibrate the transducers 50 and 60, which are held at a constant distance from one another. First, the time of flight ($TOF_1$ and $TOF_2$, respectively) of the surface skimming longitudinal waves 18 can be measured on each of the two reference samples. The two unknowns (surface distance between points A and B, SD, and time within the contact transducers 50, 60, TW) can then be determined for the ultrasonic wave. The surface distance, SD, can be determined by the following equation.

$$SD = (TOF_1 - TOF_2) * (V_2 * V_1)/(V_2 - V_1)$$

The time of flight attributable to the time that the ultrasonic wave spends within the contact transducers 50 and 60, TW, can be determined by the following equation.

$$TW = TOF_1 - SD/V_1$$

Once the values of SD and TW are known, one can then determine the velocity ($V_{unk}$) of an unknown material by measuring the time of flight ($TOF_{unk}$) of the ultrasonic surface skimming wave thereon and utilizing that $TOF_{unk}$ in the following equation.

$$V_{unk} = SD/(TOF_{unk} - TW)$$

Thereafter, since longitudinal wave velocity variations are primary crystal grain orientation dependent, the primary crystal grain orientation of the material 40 may be determined.

The primary crystal grain orientations of the material 40 may be determined in various ways. In some embodiments, the primary crystal grain orientations of the material 40 may be determined by comparing the measured/calculated longitudinal velocity of the material 40 with samples having known crystal grain orientations and known longitudinal velocities. In other embodiments, the primary crystal grain orientations of the material 40 may be determined from theoretical calculations based on single crystal elastic constants.

The secondary crystal grain orientations of the material 40 may also be determined. This may be accomplished by orienting the contact transducer pair 50, 60 in a direction parallel to the secondary orientation and performing the same calculations as performed for determining the primary orientation. As with the primary orientation, velocity is first deduced from the time of flight measurement, and then the associated orientation may be determined either from the measured or calculated values.

Embodiments of this invention may also utilize an immersion technique having a pitch-catch ultrasonic wave configuration as shown in Figure 2. The immersion technique may be carried out in a fluid bath 200 in any suitable fluid medium 100, such as, but not limited to, water, oil, etc. The immersion technique is similar to the contact technique described above, except in the immersion technique, there are no contact transducers 50, 60, and instead, a constant fluid path is maintained between the emitter 10 and the detector 20. A constant fluid path is also maintained between the emitter 10 and the surface 42 of the material 40, and between the detector 20 and the surface 42 of the material 40. In immersion embodiments, the leaking ultrasonic energy 19 will be transmitted to the detector 20, and may also be emitted into the fluid medium 100. In the immersion technique, as in the contact technique, the distance between the emitter 10 and the detector 20 is constant, and the emitter 10 and the detector 20 are held in fixed positions, so the distance between points A and B is constant. The calculations and measurements in the immersion technique are otherwise similar to those discussed above for the contact technique.

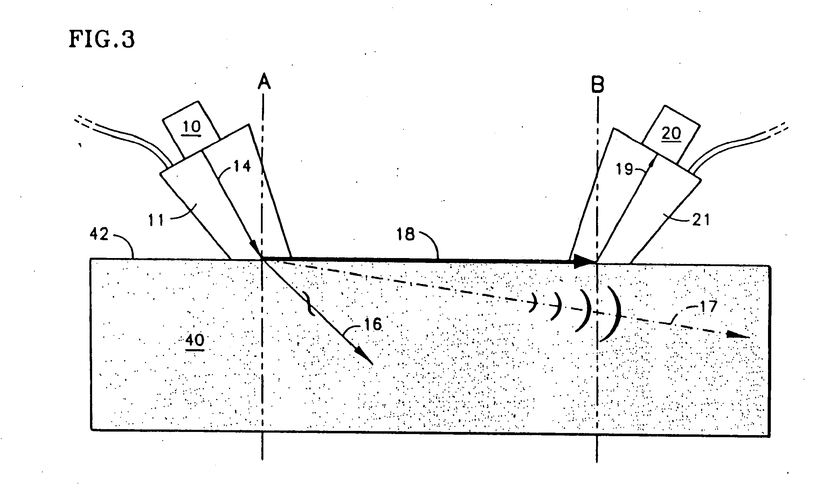

Embodiments of this invention may also utilize a bubbler technique having a pitch-catch ultrasonic wave configuration as shown in Figure 3. The bubbler technique is similar to the contact technique described above, but in the bubbler technique, any suitable fluid (i.e., water, oil, etc.) may be used to carry the ultrasonic wave from the emitter 10 to the material 40, and from the material 40 to the detector 20. Tubes or other suitable bubbler transducers 11, 21 may be used to carry fluid to maintain a fluid path between the emitter 10 and the material 40, and between the detector 20 and the material 40. In bubbler embodiments, the leaking ultrasonic energy 19 will be transmitted to the detector 20 through the fluid in the bubbler transducer 21. The calculations and measurements in the bubbler technique are otherwise similar to those discussed above for the contact technique.

This invention can be used to determine the crystallographic orientations of many directionally solidified or single crystal materials, such as those used in aero and/or land based gas turbine engine components. Some exemplary components that this invention may be utilized with include, but are not limited to, high pressure turbine blades, low pressure turbine blades, combustor liners, blade outer air seals, etc.

Various contact, immersion and bubbler techniques were utilized to verify the feasibility and accuracy of this invention. Ultrasonic surface skimming longitudinal waves were observed and measured for various directionally solidified and single crystal materials, including various nickel alloys, titanium alloys, aluminum alloys and copper alloys.

In embodiments, the contact technique utilized wedges made of Perspex® material having 5-15 MHz transducers embedded therein. The incident angles 30 tested varied from about 25-30° from normal to the surface 42 of the material 40. Several samples comprised single crystal materials so the velocity dependence upon primary crystal grain orientation could be tested. Bulk longitudinal velocities of various materials were also measured at specific orientations so comparisons thereof could be made with the velocities of the surface skimming longitudinal waves.

In embodiments, the immersion technique utilized 10 MHz transducers and water. Several measurements were made on various materials having known velocities. Some embodiments utilized a single transducer in pulse/echo mode, and measurements of time-of-flight for a reflected signal from an edge were obtained. Other embodiments utilized two immersion transducers in a pitch/catch configuration in a fixture having a known separation therebetween, and measurements of time-of-flight for an ultrasonic surface skimming longitudinal wave were obtained.

In embodiments, the bubbler technique utilized a fixture that held small bubbler transducers 11, 21 at fixed positions, and measurements of time-of flight for an ultrasonic surface skimming longitudinal wave were obtained.

The velocities of the ultrasonic surface skimming longitudinal waves of samples having unknown crystal grain orientations were compared to velocities of samples having known crystal grain orientations, which had their crystal grain orientations previously determined via the Laue x-ray technique. Such velocities were measured on unknown samples at various positions and orientations on the surfaces thereof (i.e., throughout 360°), and crystal grain orientations were determined therefrom. The crystal grain orientations obtained by the methods of this invention were found to match those obtained by the Laue technique within about +/- 1°.

While ultrasonic waves (i.e., longitudinal waves and shear waves) have been used to inspect for subsurface reflectors in polycrystalline materials, and ultrasonic waves (i.e., Rayleigh surface waves) have been used to measure/inspect for surface anomalies in various polycrystalline materials, ultrasonic waves (i.e., surface skimming longitudinal waves) have not been used to determine velocities of various materials to determine crystal grain orientations of directionally solidified or single crystal materials and/or to sort various materials, etc. When ultrasonic longitudinal and shear waves are used to inspect for subsurface reflectors in polycrystalline materials, the amplitude and time-of-flight of reflected ultrasonic waves can be used to detect and evaluate features within the volume of a material. When ultrasonic Rayleigh surface waves are used to measure/inspect for surface anomalies in various polycrystalline materials, the anomalies in the Rayleigh surface waves can be used to evaluate surface defects on a material. When ultrasonic surface skimming longitudinal waves are used, the velocity at which an ultrasonic surface skimming longitudinal wave travels along the surface of a material can be used to determine the crystal grain orientations of the material, among other things. These are three very different techniques, which measure very different items of interest on different types of materials.

As described abode, this invention provides systems and methods for non-destructively determining the velocity of surface skimming longitudinal waves on various materials. Advantageously, the systems and methods of this invention can be easily and economically used in various environments (i.e., on-wing, in production environments, in engine overhaul facilities, in material salvage facilities, in re-work facilities, etc.). In addition to being able to use the systems and methods of this invention in environments where the Laue technique cannot be used, this invention could also be used instead of, and much easier than, the Laue technique in many instances. Many other advantages will be apparent to those skilled in the relevant art,

Various embodiments of this invention have been described in fulfillment of the various needs that the invention meets. These embodiments are merely illustrative of the principles of various embodiments of the present invention.

**Claims**

1. A method of determining at least one crystallographic orientation of a directionally solidified or single crystal material (40), comprising:

   generating an ultrasonic surface skimming longitudinal wave (18) at a first location on the material (40);
   detecting at least a portion of the surface skimming longitudinal ultrasonic wave (18) at a second location on the material (40);
   determining at least the primary crystal grain orientation of the material (40) from the detected ultrasonic wave; and
   determining if the primary crystal grain orientation falls within predetermined limits of a predetermined crystal axis.

2. The method of claim 1, wherein the determining step comprises:

   measuring the time of flight of the ultrasonic wave (18);

   determining the longitudinal velocity of the material (40) based upon the distance between the first location and the second location and the time of flight of the ultrasonic wave (19); and
   determining the at least one crystallographic orientation of the material (40) utilizing the longitudinal velocity of the material.

3. The method of claim 1 or 2, wherein the ultrasonic wave comprises a surface skimming longitudinal wave (18) having a longitudinal velocity that is dependent upon the primary crystallographic orientation of the material (40), but not upon the secondary crystallographic orientation of the material (40).

4. The method of any preceding claim, wherein the material (40) comprises a gas turbine engine component.

5. The method of claim 4, wherein the gas turbine engine component comprises at least one of: a turbine blade, a combustor liner, and a blade outer air seal.

6. The method of any preceding claim, wherein the method is utilized via at least one of: (a) while a or the component is on-wing; (b) while a or the component is in a production environment; (c) while a or the component is in an engine overhaul facility; (d) while a or the component is in a material salvage facility; and (e) while a or the component is in a re-work facility.

7. The method of any preceding claim, wherein the at least one crystallographic orientation is determined via at least one of: a contact technique, an immersion technique, and a bubbler technique.

8. The method of any preceding claim, wherein the method further comprises:

   sorting a plurality of materials (40) from one another based upon the velocity.

**Patentansprüche**

1. Verfahren zum Bestimmen mindestens einer kristallographischen Orientierung eines gerichtet fest gewordenen oder eines Einkristall-Materials (40), aufweisend:

   Erzeugen einer oberflächenüberstreichenden Ultraschall-Longitudinalwelle (18) an einer ersten Stelle auf dem Material (40);
   Nachweisen mindestens eines Teils der oberflächenüberstreichenden Ultraschall-Longitudinalwelle (18) an einer zweiten Stelle auf dem Material (40);

Bestimmen mindestens der Kristallkorn-Primärorientierung des Materials (40) aus der nachgewiesenen Ultraschallwelle; und

Bestimmen, ob die Kristallkorn-Primärorientierung innerhalb vorbestimmte Grenzen einer vorbestimmten Kristallachse fällt.

2. Verfahren nach Anspruch 1, bei dem der Schritt des Bestimmens aufweist:

Messen der Laufzeit der Ultraschallwelle (18);
Bestimmen der Longitudinalgeschwindigkeit des Materials (40) auf der Basis des Abstands zwischen der ersten Stelle und der zweiten Stelle und der Laufzeit der Ultraschallwelle (19); und Bestimmen der mindestens einen kristallographischen Orientierung des Materials (40) unter Verwendung der Longitudinalgeschwindigkeit des Materials.

3. Verfahren nach Anspruch 1 oder 2, bei dem die Ultraschallwelle eine oberflächenüberstreichende Longitudinalwelle (18) mit einer Longitudinalgeschwindigkeit, die von der primären kristallographischen Orientierung des Materials (40), aber nicht von der sekundären kristallographischen Orientierung des Materials (40) abhängt, aufweist.

4. Verfahren nach einem vorangehenden Anspruch, bei dem das Material (40) eine Gasturbinenmaschinenkomponente aufweist.

5. Verfahren nach Anspruch 4, bei dem die Gasturbinenmaschinenkomponente mindestens eine der folgenden Komponenten aufweist: eine Turbinenlaufschaufel, eine Brennerauskleidung und eine äußere Laufschaufel-Luftdichtung.

6. Verfahren nach einem vorangehenden Anspruch, bei dem das Verfahren verwendet wird in mindestens einer der folgenden Situationen: (a) während eine oder die Komponente sich am Flügel befindet; (b) während eine oder die Komponente in einer Produktionsumgebung ist; (c) während eine oder die Komponente in einer Maschinen-Überholungsanlage ist; (d) während eine oder die Komponente in einer Materialwiedergewinnungsanlage ist; und (e) während eine oder die Komponente in einer Aufarbeitungsanlage ist.

7. Verfahren nach einem vorangehenden Anspruch, bei dem die mindestens eine kristallographische Orientierung mittels mindestens einer der folgenden Techniken bestimmt wird: einer Kontakttechnik, einer Tauchtechnik und einer Gasspülertechnik.

8. Verfahren nach einem vorangehenden Anspruch, bei dem das Verfahren außerdem aufweist:

Auseinandersortieren einer Mehrzahl von Materialien (40) auf der Basis der Geschwindigkeit.

**Revendications**

1. Procédé permettant de déterminer au moins une orientation cristallographique d'un matériau obtenu par solidification directionnelle ou monocristallin (40), le procédé comprenant les étapes consistant à :

générer une onde ultrasonique longitudinale rasante (18) à un premier emplacement sur le matériau (40) ;
détecter au moins une partie de l'onde ultrasonique longitudinale rasante (18) à un deuxième emplacement sur le matériau (40) ;
déterminer au moins l'orientation principale du grain cristallin du matériau (40) à partir de l'onde ultrasonique détectée ; et
déterminer si l'orientation principale du grain cristallin s'inscrit dans des limites prédéfinies d'un axe cristallin prédéfini.

2. Procédé selon la revendication 1, l'étape consistant à déterminer comprenant les étapes consistant à :

mesurer le temps de vol de l'onde ultrasonique (18) ;
déterminer la vitesse longitudinale du matériau (40) en fonction de la distance entre le premier emplacement et le deuxième emplacement et du temps de vol de l'onde ultrasonique (18) ; et
déterminer ladite au moins une orientation cristallographique du matériau (40) à l'aide de la vitesse longitudinale du matériau.

3. Procédé selon la revendication 1 ou 2, l'onde ultrasonique comprenant une onde longitudinale rasante (18) possédant une vitesse longitudinale qui dépend de l'orientation cristallographique principale du matériau (40) mais qui ne dépend pas de l'orientation cristallographique secondaire du matériau (40).

4. Procédé selon l'une quelconque des revendications précédentes, le matériau (40) constituant un composant de moteur à turbine à gaz.

5. Procédé selon la revendication 4, le composant de moteur à turbine à gaz comprenant au moins un des éléments suivants : une aube de turbine, une chemise de chambre de combustion et un joint extérieur d'étanchéité à l'air pour aubes.

6. Procédé selon l'une quelconque des revendications précédentes, le procédé étant mis en oeuvre dans au moins une des circonstances suivantes : (a) alors qu'un ou que le composant se trouve sous l'aile ; (b) alors qu'un ou que le composant se trouve en environnement de production ; (c) alors qu'un ou que le composant se trouve dans un centre de révision de moteur ; (d) alors qu'un ou que le composant se trouve dans un centre de récupération de matériaux ; et (e) alors qu'un ou que le composant se trouve dans un centre de remise en état.

**7.** Procédé selon l'une quelconque des revendications précédentes, ladite au moins une orientation cristallographique étant déterminée au moyen d'au moins une des techniques suivantes : une technique de contact, une technique d'immersion et une technique de barbotage.

**8.** Procédé selon l'une quelconque des revendications précédentes, le procédé comprenant en outre l'étape consistant à :

trier une pluralité de matériaux (40) en fonction de la vitesse.

FIG.1

FIG.2

FIG.3

**EP 1 850 126 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4899589 A